(19) **Europäisches Patentamt / European Patent Office / Office européen des brevets**

(11) **EP 1 787 848 B1**

(12) **FASCICULE DE BREVET EUROPEEN**

(45) Date de publication et mention
de la délivrance du brevet:
**10.02.2010 Bulletin 2010/06**

(51) Int Cl.:
***B60K 31/04*** *(2006.01)*

(21) Numéro de dépôt: **06301130.8**

(22) Date de dépôt: **07.11.2006**

(54) **Système de contrôle destiné à piloter la vitesse d'un véhicule automobile**

Fahrzeuggeschwindigkeitsregelung

Cruise control for motor vehicle

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.11.2005 FR 0511653**

(43) Date de publication de la demande:
**23.05.2007 Bulletin 2007/21**

(73) Titulaire: **Peugeot Citroën Automobiles SA
78140 Vélizy-Villacoublay (FR)**

(72) Inventeur: **Lecointre, Bruno
78100 Saint Germaine en Laye (FR)**

(56) Documents cités:
**DE-A1- 19 654 769      DE-A1-102004 041 072
DE-C1- 10 003 530      US-B1- 6 459 981**

**Description**

La présente invention concerne un système de contrôle destiné à piloter la vitesse d'un véhicule automobile. La présente invention concerne également des applications du système de l'invention dans des équipements tel qu'un limiteur ou un régulateur de vitesse.

Dans une certaine catégorie de véhicules automobiles, parmi lesquels on trouve aussi bien des voitures dites de tourisme que des véhicules industriels, le conducteur a la possibilité de régler la vitesse automatiquement sur la base d'une vitesse consigne. Cette faculté est fort appréciable sur les longs trajets ou sur des parcours particuliers sur lesquels le conducteur, notamment d'un véhicule industriel ou d'un véhicule spécial, est amené à diriger son attention plutôt sur ce qu'il transporte ou déplace ou lorsqu'il est important, par exemple pour éviter de secouer inutilement le bien à transporter, de le déplacer avec une vitesse la plus constante possible.

Un autre type d'application pour un régulateur de vitesse est un régulateur de distance entre deux véhicules qui se suivent. Dans une telle situation, le véhicule qui suit l'autre doit adapter sa vitesse en permanence à celle du véhicule qu'il suit.

Par ailleurs, il est utile de rappeler que la vitesse d'un véhicule ne dépend pas seulement de la force motrice que l'on peut y appliquer, mais qu'elle dépend aussi des circonstances routières et climatiques, ces dernières exerçant généralement une influence réductrice sur la vitesse du véhicule. Rappelons de même, bien que cela semble être banal, que la vitesse d'un véhicule est influencée aussi par la pente de la route ou du terrain sur lequel le véhicule évolue. Cette influence peut être aussi bien négative qu'elle peut être positive. Autrement dit, lorsqu'un véhicule évolue sur une route montante, la pente exerce une influence négative sur la vitesse, tendant à faire ralentir le véhicule, et lorsque le véhicule évolue sur une route descendante, la pente exerce une influence positive sur la vitesse, tendant à accélérer le véhicule.

Les systèmes de contrôle destinés à piloter la vitesse d'un véhicule automobile comprennent généralement un calculateur vers lequel sont envoyés différents signaux représentatifs, par exemple, de la vitesse instantanée du véhicule, d'une vitesse de consigne et de paramètres permettant au système de maintenir la vitesse du véhicule constante (connue par le document DE 102004041072 comportant les caractéristiques du préambule de la revendication 1). Cependant, comme dans tout système de régulation, la précision de réglage dépend à un fort degré de la nature des données que l'on introduit dans un tel calculateur et notamment de la précision avec laquelle ces données peuvent être mesurées.

Aussi, on pourrait essayer de concevoir des systèmes de pilotage de vitesse utilisant le moins possible les valeurs mesurées.

Le but de l'invention est de proposer un système de contrôle et/ou de commande permettant de réguler la vitesse d'un véhicule motorisé avec des moyens les plus simples possibles tout en obtenant une bonne précision de régulation.

Le but de l'invention est atteint avec un système de contrôle destiné à piloter la vitesse d'un véhicule automobile, comprenant un capteur de vitesse destiné à engendrer un signal représentatif de la vitesse instantanée du véhicule et un moyen permettant d'engendrer un signal représentatif d'une vitesse de consigne du véhicule.

Conformément à l'invention, le système comprend également un capteur destiné à engendrer un signal représentatif du couple instantané d'un moteur du véhicule, un calculateur destiné à estimer, sur la base d'un modèle d'évolution du véhicule et des signaux respectivement représentatifs de la vitesse instantanée du véhicule, du couple moteur instantané et d'une vitesse de consigne du véhicule, une valeur de consigne de couple moteur, les seules valeurs d'entrée utilisées étant la vitesse instantanée du véhicule, le couple moteur mesuré et la vitesse de consigne, et un moyen permettant d'engendrer un signal représentatif de la valeur de consigne de couple moteur estimée à partir du couplage d'une part de la valeur de consigne liée au retour d'état venant du calculateur et d'autre part de la valeur de consigne liée à l'observation d'état provenant du moyen et destiné à être envoyé vers un dispositif destiné à agir sur le couple du moteur du véhicule

Le but de l'invention est également atteint avec un régulateur de vitesse pour un véhicule automobile, un limiteur de vitesse pour un véhicule automobile et un régulateur de distance pour un véhicule automobile par rapport à un véhicule précédent, chacun de ces trois moyens comprenant un système de contrôle tel que défini ci avant.

Le système de l'invention présente une structure très simple, ne nécessitant aucune instrumentation spécifique et s'insérant dans tout type de contrôle en couple de la chaîne de traction d'un véhicule automobile quelle que soit la technologie employée. Le système de l'invention utilise comme seules valeurs d'entrée la vitesse mesurée du véhicule automobile, le couple moteur mesuré et la vitesse de consigne. Le système de l'invention produit comme seule valeur de sortie la consigne de couple moteur. Un système d'une telle structure simple est facile à réaliser et cela en un coût très faible. La valeur de couple peut être mesurée aussi bien à une roue motrice qu'au moteur, bien que l'on ne parlera dans la suite que de couple moteur, et le système s'applique à tout type de moteur et de transmission, à savoir moteur à essence, moteur diesel, boîte manuelle, boîte pilotée, motorisation hybride etc.

Par ailleurs, le système de l'invention permet de faire un suivi de consigne, c'est-à-dire le système permet de faire varier continuellement la vitesse de consigne. La structure du système permet également de prendre en compte le critère usuel de paramétrage de l'agrément lors des variations de vitesse. Le paramétrage est basé sur des critères physiques et se résume au choix de deux constantes de temps. Ceci rend son réglage aisé et le rend facilement adaptable à différents types d'application. Le paramétrage peut aussi être déterminé par simulation.

Le système de l'invention permettant de suivre et de maintenir une vitesse de consigne, une fois activé, en compensant automatiquement les variations d'effort résistant rencontrées par le véhicule, il peut donc être utilisé dans tout système nécessitant de piloter la vitesse du véhicule, tel qu'un régulateur de vitesse, un contrôleur du véhicule en vitesse, un contrôleur de manoeuvrabilité, un limiteur de vitesse, une régulation de distance avec un véhicule le précédant, etc.

La présente invention concerne également les caractéristiques ci-après considérées isolément ou selon toutes combinaisons techniquement possibles :

- le système comprend un calculateur destiné à estimer l'accélération instantanée, la vitesse et les efforts résistifs et un moyen permettant d'engendrer des signaux représentatifs de ces valeurs calculées et destinés à être envoyés vers le calculateur estimant la consigne d'accélération du véhicule ;
- le système comprend un calculateur-modulateur destiné à moduler la vitesse de consigne du véhicule en fonction d'un nombre prédéterminé de paramètres spécifiques au véhicule et/ou aux conditions de conduite ;
- le calculateur destiné à estimer la consigne d'accélération est conformé pour estimer également une valeur de consigne de freinage et comprend un moyen permettant d'engendrer un signal représentatif de la valeur de consigne de freinage.

Le système de l'invention est conçu sur la base des réflexions suivantes.

Le système assure le pilotage de la chaîne de traction pour obtenir puis maintenir une vitesse de consigne choisie. Ce pilotage s'exprime par l'élaboration d'une consigne de couple à réaliser.

Le système détermine une consigne de couple en fonction de l'état dynamique instantané du véhicule, afin de maintenir et/ou d'atteindre la vitesse souhaitée. Pour obtenir ce résultat, le système est conformé d'une part pour mesurer la vitesse instantanée du véhicule et d'autre part pour exploiter des données issues d'un observateur d'état permettant d'estimer des variables non mesurées qui, outre la vitesse du véhicule, décrivent la dynamique du véhicule.

Une fois la dynamique instantanée connue, le système élabore la consigne de couple. Cette consigne est du type commande par retour d'état, c'est-à-dire elle est construite à partir de la vitesse de consigne et des variables décrivant l'état dynamique du véhicule.

La construction de l'observation d'état de la commande commence par le choix d'un modèle d'évolution de véhicule. On choisit volontairement un modèle très simplifié qui assure la simplicité du régulateur sans dégrader sa performance, puisque la commande compensera les erreurs de modélisation. On suppose donc que l'accélération du véhicule $\gamma$ répond à une accélération de consigne $\gamma_{cons}$ suivant un modèle du 1$^{er}$ ordre de constante de temps $\tau$, à l'accélération résistante $d$ près:

$$\gamma + \tau . \dot{\gamma} = \gamma_{cons} - d$$

La dynamique du véhicule est décrite par la vitesse véhicule v, l'accélération véhicule $\gamma$ et l'accélération résistante d. La mesure de la vitesse est disponible sur le véhicule ; par contre les accélérations $\gamma$ et d ne le sont pas (sauf cas particuliers). Pour les estimer, on fait appel à un observateur d'état : on utilise le modèle de dynamique véhicule pour prévoir la vitesse à un instant donné à partir d'une estimation des accélérations à l'instant précédent. En comparant la prédiction à la mesure, on peut recaler les estimations des accélérations, et ainsi de suite.

La structure de l'observateur est standard et introduit les trois paramètres de réglage $k_a$, $k_b$, $k_c$ (les variables chapeautées sont les estimations, v est la mesure) :

$$\begin{cases} \dot{\hat{v}} = \hat{\gamma} + k_a (v - \hat{v}) \\ \tau . \dot{\hat{\gamma}} = -\hat{\gamma} - \hat{d} + \gamma_{cons} + k_b (v - \hat{v}) \\ \dot{\hat{d}} = 0 + k_c (v - \hat{v}) \end{cases}$$

Le réglage de l'observateur se fait par la technique de placement de pôles. On peut réduire ce réglage au choix de la constante de temps de l'observateur $T_{obs}$ à partir de laquelle on déduira les trois gains :

$$k_a = \frac{3}{T_{obs}} - \frac{1}{\tau} \qquad \frac{k_b}{\tau} = \frac{3}{T_{obs}^2} - \frac{3}{\tau.T_{obs}} + \frac{1}{\tau^2} \qquad k_c = \frac{-\tau}{T_{obs}^3}$$

Pour initialiser l'observateur d'état, on pourra utiliser un observateur analogue fonctionnant en boucle ouverte, c'est-à-dire utilisant le couple moteur converti en accélération motrice à la place de l'accélération de consigne venant du retour d'état.

L'estimation de l'accélération résistante d englobe à la fois les efforts résistants (aérodynamique, pente, frottements) et les erreurs de modèle du fait du recalage vitesse mesurée / vitesse estimée. Ceci justifie la simplicité du modèle et garantit la robustesse et la performance de la régulation de vitesse.

La dynamique du véhicule étant connue à chaque instant grâce à l'observateur, on construit la consigne d'accélération comme une combinaison linéaire de l'état du véhicule et de la vitesse de consigne $V_{cons}$ :

$$\gamma_{cons} = k_0.V_{cons} - k_1.\hat{v} - k_2.\hat{\gamma} - k_3.\hat{d}$$

Comme pour l'observateur d'état on détermine les paramètres de réglage de la commande $k_0$, $K_1$, $k_2$ et $K_3$ par un placement de pôles réduit au choix de la constante de temps de la régulation $T_{reg}$. Les paramètres sont alors liés à cette constante de temps par :

$$k_1 = \frac{\tau}{T_{reg}^2} \qquad k_2 = \frac{2.\tau}{T_{reg}} - 1 \qquad k_3 = -1 \qquad k_0 = k_1$$

On prendra soin de saturer la consigne d'accélération aux limites du potentiel de la chaîne de traction pour garantir la cohérence de l'estimation d'état.

L'accélération de consigne peut ensuite être convertie en consigne de couple suivant l'équation :

$$Masse.\gamma_{cons} = \frac{Couple\ mth_{cons} * dému}{Rayon\ roue}$$

Une éventuelle erreur sur les paramètres de conversion n'a pas d'influence sur les performances du régulateur et sera compensée au même titre que les erreurs de modèle.

Le fait d'utiliser les trois variables estimées plutôt que des mesures est primordial car il garantit la cohérence de phase et de dynamique du modèle. C'est le couplage observateur / retour d'état qui permet d'assurer une grande fluidité de régulation et une grande robustesse face aux diverses perturbations telles que des bruits de mesure, des efforts résistants et des erreurs de modèle.

Le système de l'invention est avantageusement conformé pour prendre en compte des spécifications d'agrément.

En effet, la structure de commande fait que la réponse du véhicule à un échelon de vitesse de consigne est assimilable à une réponse du 1er ordre. Sachant cela, on peut vouloir modifier cette réponse pour satisfaire à certains critères d'agrément.

La structure du régulateur est compatible avec ce type de spécification : il suffit pour cela que la vitesse de consigne suive le profil spécifié et que le temps de réponse du régulateur et du véhicule aient été intégrés dans ces spécifications. En plaçant la spécification d'agrément en amont du régulateur, on garantit le respect des critères d'agrément sans modifier le réglage du régulateur.

La solution consiste donc à placer un "filtre d'agrément" en amont du régulateur qui traitera le profil de vitesse à suivre lors des transitoires.

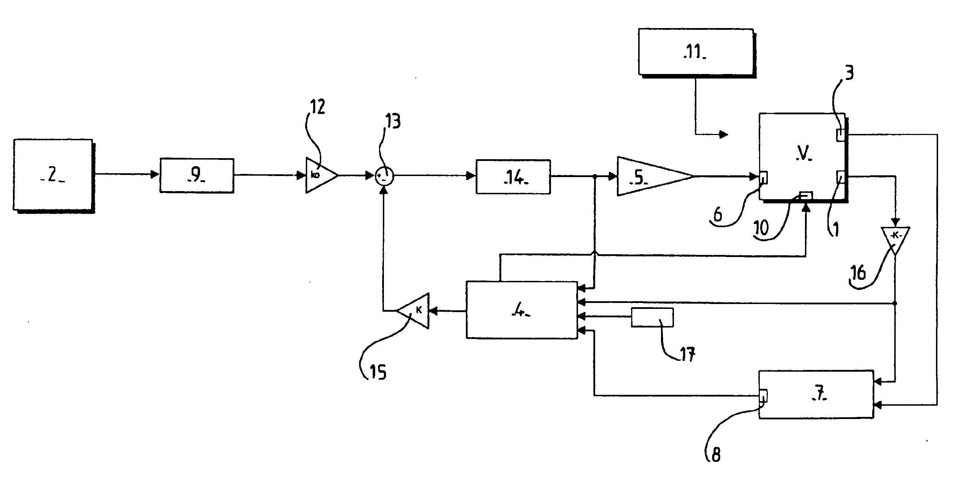

La figure 1 annexée, figure unique, représente un exemple de réalisation d'un système selon l'invention.

Selon cet exemple, le système de contrôle comprend un capteur de vitesse 1 destiné à engendrer un signal représentatif de la vitesse instantanée d'un véhicule V équipé du système de l'invention. La vitesse instantanée du véhicule résulte en partie d'un environnement 11 dans lequel le véhicule se déplace, cet environnement étant représenté par exemple par du vent, de la pente, de la pluie et la chaussée mouillée qui en résulte. Le système comprend également un moyen 2 permettant d'engendrer un signal représentatif d'une vitesse de consigne du véhicule, le moyen 2 étant actionné par le conducteur du véhicule. Le système comprend en outre un capteur 3 destiné à engendrer un signal représentatif du couple instantané d'un moteur du véhicule, un premier calculateur 4 destiné d'une part à estimer, sur la base d'un modèle d'évolution du véhicule et de signaux respectivement représentatifs de la vitesse instantanée du véhicule, du couple moteur instantané et d'une vitesse de consigne du véhicule, une valeur de consigne de couple moteur et un moyen 5 permettant d'engendrer un signal représentatif de la valeur de consigne de couple moteur estimée et destiné à être envoyé vers un dispositif 6 destiné à agir sur le couple du moteur du véhicule. Le calculateur 4 est avantageusement, mais non nécessairement, conformé pour estimer également une valeur de consigne de freinage.

Le système de contrôle comprend avantageusement un second calculateur 7 destiné à estimer l'accélération instantanée du véhicule, sa vitesse et les efforts résistants et un moyen 8 permettant d'engendrer un signal représentatif de la valeur estimée d'accélération du véhicule et destiné à être envoyé vers le calculateur 4 lors de son initialisation.

En effet, le bloc 7 sert uniquement à l'initialisation du bloc 4. Une fois le système mis en fonctionnement et son initialisation terminée, le bloc 7 n'est plus activé ; l'estimation de l'accélération, de la vitesse et des efforts résistifs est alors assurée par le bloc 4 seul. La sortie du bloc 4 détermine une partie de la consigne brute d'accélération sortant du bloc 13, c'est en fait la part de la consigne liée au retour d'état. Le reste de la consigne vient du bloc 12, donc du conducteur.

Le système de contrôle comprend avantageusement, mais non nécessairement un calculateur-modulateur 9 destiné à moduler la vitesse de consigne du véhicule en fonction d'un nombre prédéterminé de paramètres spécifiques au véhicule et/ou aux conditions de conduite et/ou à l'agrément de conduite.

Le système de contrôle de l'invention comprend enfin un moyen 10 permettant d'engendrer un signal représentatif de la valeur de consigne de freinage.

Un amplificateur logique 12 pour pondérer la vitesse de consigne issue du calculateur-modulateur 9 selon le réglage du retour d'état avant d'intégrer le retour d'état au moyen d'un composant logique 13, engendre un signal de consigne brute d'accélération. L'amplificateur 12 fait partie du retour d'état et est égal au gain de régulation K1 tel que K1 = K0. Un limiteur 14 transforme le signal de consigne brute d'accélération en un signal de consigne pondéré d'accélération. Un amplificateur logique 15 est destiné à engendrer un signal de retour d'état sur la base d'un signal engendré par le premier calculateur 4, un amplificateur 16 est destiné à transformer le signal engendré par le capteur de vitesse 1 en un signal d'entrée pour le second calculateur 7 et un interrupteur 17 permet au conducteur du véhicule d'activer et de désactiver le système de contrôle de l'invention.

Le système de contrôle selon l'invention présente l'avantage d'utiliser une loi de commande par "retour d'état" couplée à un "estimateur d'état étendu". Ce type de structure permet :

- de limiter le nombre d'informations nécessaires, en particulier d'utiliser l'accélération du véhicule en tant que valeur estimée et non pas mesurée ;
- d'avoir une calibration très simple à l'aide de deux paramètres seulement ; ces paramètres ayant, en plus, une signification physique, ce qui permet d'arbitrer simplement le compromis dynamique / agrément, tout en ayant des calibrations indépendantes de l'environnement du système (choix du véhicule, du moteur, etc.) ;
- d'avoir un système très robuste, c'est-à-dire peu sensible à la variation des paramètres utilisés ; sa structure faisant que le système compense automatiquement les erreurs sur les paramètres utilisés, par exemple la masse du véhicule ;
- d'avoir une dynamique de régulation adaptée à l'automobile : la loi de commande permet de maintenir la vitesse tout en procurant l'agrément nécessaire à ce type de prestation.

Un autre avantage est que le système est très simple :

- il n'utilise que la mesure de vitesse (plus le couple moteur pour l'initialisation) ;
- il n'a qu'une seule sortie (le couple à réaliser à chaque instant) ;
- il requiert très peu de paramètres (masse véhicule, démultiplication de transmission) ;
- son implantation sur un calculateur est peu coûteuse.

De même, le système est indépendant :

- il peut fonctionner sur n'importe quel calculateur à la seule condition d'avoir accès à la vitesse et au couple moteur ;
- il est compatible avec tout type de chaîne de traction telle qu'une boîte de vitesses mécanique (BVM), une boîte de vitesses automatique (BVA), une boîte de vitesses mécanique pilotée (BVMP) et une transmission continuellement variable (CVT) et peut également fonctionner avec des systèmes plus complexes où les freins sont pilotés ;

- sa calibration ne dépend pas de l'environnement (véhicule, moteur, etc.) ;
- il est compatible avec tout type de système nécessitant un contrôle de la vitesse du véhicule.

**Revendications**

1. Système de contrôle destiné à piloter la vitesse d'un véhicule automobile, comprenant un capteur de vitesse (1) destiné à engendrer un signal représentatif de la vitesse instantanée du véhicule et un moyen (2) permettant d'engendrer un signal représentatif d'une vitesse de consigne du véhicule, **caractérisé en ce qu'**il comprend également un capteur (3) destiné à engendrer un signal représentatif du couple instantané d'un moteur du véhicule, un calculateur (4) destiné à estimer, sur la base d'un modèle d'évolution du véhicule et des signaux respectivement représentatifs de la vitesse instantanée du véhicule, du couple moteur instantané et d'une vitesse de consigne du véhicule, une valeur de consigne de couple moteur, les seules valeurs d'entrée utilisées étant la vitesse instantanée du véhicule, le couple moteur mesuré et la vitesse de consigne, et un moyen (5) permettant d'engendrer un signal représentatif de la valeur de consigne de couple moteur estimée à partir du couplage d'une part de la valeur de consigne liée au retour d'état venant du calculateur (4) et d'autre part de la valeur de consigne liée à l'observation d'état provenant du moyen (2) et destiné à être envoyé vers un dispositif (6) destiné à agir sur le couple du moteur du véhicule.

2. Système selon la revendication 1, **caractérisé en ce qu'**il comprend un calculateur (7) destiné à estimer, sur la base d'un modèle d'évolution du véhicule et des signaux respectivement représentatifs de la vitesse instantanée du véhicule et du couple moteur instantané, l'accélération instantanée du véhicule, et un moyen (8) permettant d'engendrer un signal représentatif de la valeur estimée de l'accélération du véhicule et destiné à être envoyé vers le calculateur (4) lors de son initialisation.

3. Système selon la revendication 1 ou 2, **caractérisé en ce qu'**il comprend un calculateur-modulateur (9) destiné à moduler la vitesse de consigne du véhicule en fonction d'un nombre prédéterminé de paramètres spécifiques au véhicule èt/ou aux conditions de conduite et/ou à l'agrément de conduite.

4. Système selon l'une quelconque des revendications 1 à 3, **caractérisé en ce que** le calculateur (4) destiné à estimer l'accélération de consigne, est conformé pour estimer également une valeur de consigne de freinage et **en ce qu'**il comprend un moyen (10) permettant d'engendrer un signal représentatif de la valeur de consigne de freinage.

5. Régulateur de vitesse pour un véhicule automobile, **caractérisé en ce qu'**il comprend un système selon l'une quelconque des revendications 1 à 4.

6. Limiteur de vitesse pour un véhicule automobile, **caractérisé en ce qu'**il comprend un système selon l'une quelconque des revendications 1 à 4.

7. Régulateur de distance pour un véhicule automobile par rapport à un véhicule précédent, **caractérisé en ce qu'**il comprend un système selon l'une quelconque des revendications 1 à 4.

**Claims**

1. Control system intended to guide the speed of an automotive vehicle, comprising a speed pickup (1) intended to generate a representative signal of the instantaneous speed of the vehicle and a means (2) allowing the generation of a representative signal of a cruising speed of the vehicle, **characterized in that** it likewise comprises a pickup (3) intended to generate a representative signal of the instantaneous torque of a motor of the vehicle, a calculator (4) intended to estimate, on the basis of an evolution model of the vehicle and signals respectively representative of the instantaneous speed of the vehicle, of the instantaneous motor torque and of a cruising speed of the vehicle, a motor torque set value, the sole input values which are used being the instantaneous speed of the vehicle, the measured motor torque and the cruising speed, and a means (5) allowing the generation of a representative signal of the motor torque set value estimated from the coupling on the one hand of the set value linked to the status return originating from the calculator (4) and on the other hand of the set value linked to the status observation originating from the means (2) and intended to be delivered to a device (6) intended to act on the torque of the motor of the vehicle.

2. System according to Claim 1, **characterized in that** it comprises a calculator (7) intended to estimate, on the basis of an evolution model of the vehicle and signals respectively representative of the instantaneous speed of the vehicle and of the instantaneous motor torque, the instantaneous acceleration of the vehicle, and a means (8) allowing the generation of a representative signal of the estimated value of the acceleration of the vehicle and intended to be delivered to the calculator (4) on its initialization.

3. System according to Claim 1 or 2, **characterized in that** it comprises a calculator/modulator (9) intended to modulate the cruising speed of the vehicle as a function of a predetermined number of specific parameters to the vehicle and/or to the driving conditions and/or to the driving pleasure.

4. System according to any of Claims 1 to 3, **characterized in that** the calculator (4) intended to estimate the set acceleration, is formed to likewise estimate a set braking value and **in that** it comprises a means (10) allowing the generation of a representative signal of the set braking value.

5. Speed regulator for an automotive vehicle, **characterized in that** it comprises a system according to any of Claims 1 to 4.

6. Speed limiter for an automotive vehicle, **characterized in that** it comprises a system according to any of Claims 1 to 4.

7. Distance regulator for an automotive vehicle with respect to a preceding vehicle, **characterized in that** it comprises a system according to any of Claims 1 to 4.


**Patentansprüche**

1. Steuersystem, das dazu bestimmt ist, die Geschwindigkeit eines Kraftfahrzeugs zu steuern, das einen Geschwindigkeitssensor (1) aufweist, der dazu bestimmt ist, ein Signal zu erzeugen, das für die Momentangeschwindigkeit des Fahrzeugs repräsentativ ist, und ein Mittel (2), das es erlaubt, ein Signal zu erzeugen, das für eine Sollgeschwindigkeit des Fahrzeugs repräsentativ ist, **dadurch gekennzeichnet, dass** es ferner einen Sensor (3) aufweist, der dazu bestimmt ist, ein Signal zu erzeugen, das für das Momentandrehmoment eines Motors des Fahrzeugs repräsentativ ist, einen Rechner (4), der dazu bestimmt ist, auf der Grundlage eines Entwicklungsmodells des Fahrzeugs und der Signale, die jeweils für die Momentangeschwindigkeit, das Momentmotordrehmoment und eine Sollgeschwindigkeit des Fahrzeugs repräsentativ sind, einen Sollwert des Motordrehmoments zu schätzen, wobei die einzigen verwendeten Eingangswerte die Momentangeschwindigkeit des Fahrzeugs, das gemessene Motordrehmoment und die Sollgeschwindigkeit sind, und ein Mittel (5), das es erlaubt, ein Signal zu erzeugen, das für den Sollwert des Motordrehmoments charakteristisch ist, der ausgehend von dem Koppeln einerseits des Sollwerts, der mit der Zustandsrückmeldung, die von dem Rechner (4) kommt, verbunden ist, und andererseits ausgehend von dem Sollwert, der mit der Zustandsbeobachtung verbunden ist, die von dem Mittel (2) kommt, geschätzt wird und dazu bestimmt ist, zu einer Vorrichtung (6) gesendet zu werden, die dazu bestimmt ist, auf das Drehmoment des Motors des Fahrzeugs einzuwirken.

2. System nach Anspruch 1, **dadurch gekennzeichnet, dass** es einen Rechner (7) aufweist, der dazu bestimmt ist, auf der Grundlage eines Entwicklungsmodells des Fahrzeugs und der Signale, die jeweils für die Momentangeschwindigkeit des Fahrzeugs und das Motormomentandrehmoment repräsentativ sind, die Momentanbeschleunigung des Fahrzeugs zu schätzen, und ein Mittel (8), das es erlaubt, ein Signal zu erzeugen, das für den geschätzten Wert der Beschleunigung des Fahrzeugs repräsentativ und dazu bestimmt ist, zu dem Rechner (4) bei dessen Initialisieren gesendet zu werden.

3. System nach Anspruch 1 oder 2, **dadurch gekennzeichnet, dass** es einen Rechner-Modulator (9) aufweist, der dazu bestimmt ist, die Sollgeschwindigkeit des Fahrzeugs in Abhängigkeit von einer vorbestimmten Anzahl von Parametern, die für das Fahrzeug und/oder die Fahrbedingungen und/oder den Fahrkomfort spezifisch sind, zu modulieren.

4. System nach einem der Ansprüche 1 bis 3, **dadurch gekennzeichnet, dass** der Rechner (4), der dazu bestimmt ist, die Sollbeschleunigung zu schätzen, ausgebildet ist, um auch einen Bremssollwert zu schätzen, und dass er ein Mittel (10) aufweist, das es erlaubt, ein Signal zu erzeugen, das für den Bremssollwert repräsentativ ist.

5. Geschwindigkeitsregler für ein Kraftfahrzeug, **dadurch gekennzeichnet, dass** er ein System nach einem der Ansprüche 1 bis 4 aufweist.

6. Geschwindigkeitsbegrenzer für ein Kraftfahrzeug, **dadurch gekennzeichnet, dass** er ein System nach einem der Ansprüche 1 bis 4 aufweist.

7. Entfernungsregler für ein Kraftfahrzeug in Bezug zu einem vorhergehendes Fahrzeug, **dadurch gekennzeichnet, dass** er ein System nach einem der Ansprüche 1 bis 4 aufweist.

**EP 1 787 848 B1**

## RÉFÉRENCES CITÉES DANS LA DESCRIPTION

**Documents brevets cités dans la description**

- DE 102004041072